# EUROPEAN PATENT APPLICATION

(11) **EP 4 626 045 A1**
(43) Date of publication of application: **01.10.2025**
(21) Application number: 23893634.8
(22) Date of filing: 08.11.2023
(51) Int. Cl.: H04W 4/44

(54) **VEHICLE-TO-CLOUD COMMUNICATION METHOD BASED ON SERVICE-ORIENTED ARCHITECTURE, AND STORAGE MEDIUM**

(30) Priority: 25.11.2022 CN 202211489222
(71) Applicant: NIO Software Technology (Shanghai) Co., Ltd., Shanghai 200233 (CN)
(72) Inventor: ZHAO, Hanqing, Shanghai 200233 (CN); LI, Chun, Shanghai 200233 (CN); YI, Aiguo, Shanghai 200233 (CN); KONG, Zhenqiang, Shanghai 200233 (CN); HUANG, Le, Shanghai 200233 (CN); SHI, Junjie, Shanghai 200233 (CN); ZHU, Hao, Shanghai 200233 (CN); LIU, Yong, Shanghai 200233 (CN)
(74) Representative: Vossius & Partner Patentanwälte Rechtsanwälte mbB
(86) International application number: PCT/CN2023/130413
(87) International publication number: WO 2024/109543

(57) **Abstract**

The present disclosure relates to the field of vehicle-to-cloud communication, and more specifically, to a vehicle-to-cloud communication method based on a service-oriented architecture, an in-vehicle network terminal, a cloud service platform, and a computer storage medium. The method is implemented at a vehicle side and includes the following steps: receiving an in-vehicle service list sent by a cloud, where the in-vehicle service list includes identifiers, presence states, and service status of a plurality of in-vehicle services; monitoring the plurality of in-vehicle services included in the in-vehicle service list, and updating the in-vehicle service list based on a monitoring result; and uploading the updated in-vehicle service list to the cloud, in order for a cloud service platform deployed at the cloud side to register and invoke a corresponding in-vehicle service based on the updated in-vehicle service list.

## Description

### Technical Field

The present disclosure relates to the field of vehicle-to-cloud communication, and more specifically, to a vehicle-to-cloud communication method based on a service-oriented architecture, an in-vehicle network terminal, a cloud service platform, and a computer storage medium.

### Background Art

With the rapid development of the automotive industry, vehicles are not only achieving comprehensive connectivity, autonomous driving, and data-driven capabilities, but also increasingly tending to directly reach users, enhancing experiences, and serving their personalized needs. At the same time, the introduction of high-computing power chips, perception technology, data intelligence, and other technological products has also led to the emergence of new electronic and electrical architectures.

Currently, in vehicle architecture designs, the services abstracted by the Service-Oriented Architecture (SOA) are the most fundamental and core building blocks of SOA. Each service possesses independent functionality, with interfaces between services adhering to unified standards that enable mutual accessibility and composable extensibility. Application processes are built by combinations and extensions of the services with state and service scheduling strategies, characterized by loose coupling, reusability, and scalability. SOA design shifts intra-domain or cross-domain interactions from "signal-based communication" to "service-based communication". However, according to the current vehicle-to-cloud communication solution, protocol conversion is required during vehicle-to-cloud communication between the vehicle and the cloud. The service caller must know the deployment location of the invoked service and understand the protocol, format, and other details of the target interface. This results in low efficiency and poor flexibility in vehicle-to-cloud communication.

### Summary

In order to solve or at least alleviate one or more of the above problems, the following technical solutions are provided. Embodiments of the present disclosure provide a vehicle-to-cloud communication method based on a service-oriented architecture, an in-vehicle network terminal, a cloud service platform, and a computer storage medium, thereby implementing uniform invocation of in-vehicle services by a cloud.

According to a first aspect of the present disclosure, there is provided a vehicle-to-cloud communication method based on a service-oriented architecture. The method is implemented at a vehicle side and includes the following steps: receiving an in-vehicle service list sent by a cloud, where the in-vehicle service list includes identifiers, presence states, and service status of a plurality of in-vehicle services; monitoring the plurality of in-vehicle services included in the in-vehicle service list, and updating the in-vehicle service list based on a monitoring result; and uploading the updated in-vehicle service list to the cloud, in order for a cloud service platform deployed at the cloud side to register and invoke a corresponding in-vehicle service based on the updated in-vehicle service list.

As an alternative or addition to the above solution, in a method according to an embodiment of the present disclosure, the in-vehicle services include static services deployed on all vehicles, and dynamic services deployed on selected vehicles, and the monitoring the in-vehicle services, and updating the in-vehicle service list based on a monitoring result includes: monitoring and updating the service status of the static services included in the in-vehicle service list; and monitoring and updating the presence states and the service status of the dynamic services included in the in-vehicle service list, where the presence state indicates whether the dynamic service is deployed on a vehicle, and the service status indicates whether an in-vehicle service deployed on a vehicle is available.

As an alternative or addition to the above solution, a method according to an embodiment of the present disclosure further includes: receiving a request for invoking an in-vehicle service from the cloud, where the vehicle and the cloud communicate through a message queuing telemetry transport connection; obtaining a processing result of the invoked in-vehicle service based on the request for invoking the in-vehicle service; and uploading the processing result to the cloud, in order for the cloud to return the processing result based on a callback address.

As an alternative or addition to the above solution, a method according to an embodiment of the present disclosure further includes: receiving a cloud service list sent by the cloud, the cloud service list including identifiers of a plurality of cloud services, where the cloud services are homogeneous services that vehicles based on service-oriented architecture can discover and interact with, and are converted from heterogeneous cloud services read from one or more cloud service sources by the cloud service platform by using standardized interface description information; and registering the cloud services at the vehicle side based on the cloud service list.

As an alternative or addition to the above solution, a method according to an embodiment of the present disclosure further includes: determining whether a message queuing telemetry transport connection is stable in response to receiving a request for invoking the cloud service that is initiated by the vehicle, where the vehicle and the cloud communicate through the message queuing telemetry transport connection; and uploading the request for invoking the cloud service to the cloud via the message queuing telemetry transport connection if the message queuing telemetry transport connection is stable.

As an alternative or addition to the above solution, a method according to an embodiment of the present disclosure further includes: querying whether a lightweight version of the service corresponding to the requested cloud service is deployed on the vehicle if the message queuing telemetry transport connection is unstable; and obtaining a processing result of the lightweight version of the service, and generating a response by using the processing result, if the lightweight version of the service is deployed on the vehicle; and returning an invocation failure response if the lightweight version of the service is not deployed on the vehicle.

According to a second aspect of the present disclosure, there is provided a vehicle-to-cloud communication method based on a service-oriented architecture. The method is implemented at the cloud side and includes the following steps: sending an in-vehicle service list to a vehicle, in order for the vehicle to monitor in-vehicle services included in the in-vehicle service list, and updating the in-vehicle service list based on a monitoring result, where the in-vehicle service list includes identifiers, presence states, and service status of a plurality of in-vehicle services; receiving the updated in-vehicle service list returned by the vehicle, and registering and invoking a corresponding in-vehicle service based on the updated in-vehicle service list by a cloud service platform deployed at the cloud side.

As an alternative or addition to the above solution, in a method according to an embodiment of the present disclosure, the in-vehicle services include static services deployed on all vehicles, and dynamic services deployed on selected vehicles, the presence state indicates whether the dynamic service is deployed on a vehicle, and the service status indicates whether an in-vehicle service deployed on a vehicle is available.

As an alternative or addition to the above solution, in a method according to an embodiment of the present disclosure, the registering a corresponding in-vehicle service based on the updated in-vehicle service list by a cloud service platform deployed at the cloud side includes: allowing the cloud service platform to send a request for invoking a dynamic service if the presence state of the dynamic service indicates that a dynamic service is deployed on the vehicle; and skipping allowing the cloud service platform to send a request for invoking a dynamic service if the presence state of the dynamic service indicates that the dynamic service is not deployed on the vehicle.

As an alternative or addition to the above solution, in a method according to an embodiment of the present disclosure, the invoking a corresponding in-vehicle service based on the updated in-vehicle service list by a cloud service platform deployed at the cloud side includes: querying the in-vehicle service list in response to receiving a request for invoking an in-vehicle service from a third party or internally from the cloud; and sending the request for invoking the in-vehicle service to the vehicle if the requested in-vehicle service is a static service that is available; returning an invocation failure response to the third party or internally to the cloud if the requested in-vehicle service is a static service that is unavailable; returning an invocation prohibition response to the third party or internally to the cloud if the requested in-vehicle service is a dynamic service that is not deployed on the vehicle; returning an invocation failure response to the third party or internally to the cloud, if the requested in-vehicle service is a dynamic service that is deployed on the vehicle and is unavailable; and sending the request for invoking the in-vehicle service to the vehicle, if the requested in-vehicle service is a dynamic service that is deployed on the vehicle and is available, where the vehicle and the cloud communicate through a message queuing telemetry transport connection.

As an alternative or addition to the above solution, a method according to an embodiment of the present disclosure further includes: reading heterogeneous cloud services from one or more cloud service sources, and converting the heterogeneous cloud services into homogeneous cloud services that vehicles based on service-oriented architecture can discover and interact with by using standardized interface description information; and sending a cloud service list including identifiers of the homogeneous cloud services to the vehicle, in order for the vehicle to register and invoke the homogeneous cloud services.

As an alternative or addition to the above solution, a method according to an embodiment of the present disclosure further includes: receiving interface description information sent by the vehicle and defined based on a first in-vehicle service; generating a virtual instance of service corresponding to the first in-vehicle service based on the interface description information; and running the virtual instance of service at the cloud side, and returning a service simulated response based on entered configuration information, in response to receiving a request for invoking the first in-vehicle service.

According to a third aspect of the present disclosure, there is provided an in-vehicle network terminal, including a memory, a processor, and a computer program stored on the memory and executable on the processor, where when the processor executes the program, any one of the methods according to the first aspect of the present disclosure is implemented.

According to a fourth aspect of the present disclosure, there is provided a cloud service platform, including a memory, a processor, and a computer program stored on the memory and executable on the processor, where when the processor executes the program, any one of the methods according to the second aspect of the present disclosure is implemented.

According to a fifth aspect of the present disclosure, there is provided a computer storage medium including instructions, where when the instructions are executed, any one of the methods according to the first aspect or the second aspect of the present disclosure is performed.

The vehicle-to-cloud communication solution based on the service-oriented architecture according to one or more embodiments of the present disclosure is capable of achieving uniform invocation of various in-vehicle services by having the cloud stored and managed at the cloud side and monitored and updated at the vehicle side. In this way, a service consumer can easily invoke the in-vehicle services through the cloud without having to know interface protocols, formats, or service deployment addresses, thereby expanding in-vehicle service capabilities and facilitating the implementation of vehicle-cloud integration.

### Brief Description of the Drawings

The above-mentioned and/or other aspects and advantages of the present disclosure will become more apparent and more readily appreciated from the following description of various aspects in conjunction with the accompanying drawings, in which the same or similar elements are denoted by the same reference numerals. In the accompanying drawings:
FIG. 1 is a schematic block diagram of a vehicle-to-cloud communication system 10 based on a service-oriented architecture according to one or more embodiments of the present disclosure;
FIG. 2 is a schematic flowchart of a vehicle-to-cloud communication method 20 based on a service-oriented architecture according to one or more embodiments of the present disclosure; and
FIG. 3 is a schematic flowchart of a vehicle-to-cloud communication method 30 based on a service-oriented architecture according to one or more embodiments of the present disclosure.

### Detailed Description of Embodiments

The following detailed description is merely exemplary in nature, and is not intended to limit the disclosed technologies or the application and use of the disclosed technologies. In addition, there is no intention to be bound by any expressed or implied theory presented in the foregoing technical field and background art, or the following detailed description.

In the following detailed description, many details are set forth to provide a more thorough understanding of the disclosed technologies. However, it is evident to those of ordinary skill in the art that the disclosed technologies can be practiced without these details. In other instances, well-known features are not described in detail, to avoid obscuring the descriptions unnecessarily.

The terms such as "include" and "comprise" are used to indicate that in addition to elements and steps that are directly and clearly described in this specification, other elements and steps that are not directly or clearly described are not excluded from the technical solutions of the present disclosure. The terms such as "first" and "second" are not used to indicate sequences of the elements in terms of time, space, size, etc., and are merely used to distinguish between the elements.

Various exemplary embodiments according to the present disclosure will be described below in detail with reference to the accompanying drawings.

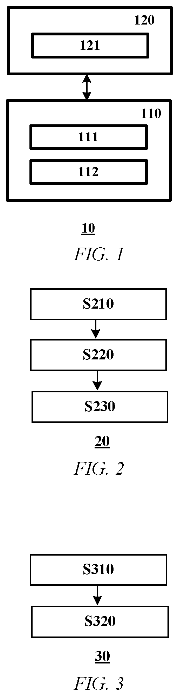

FIG. 1 is a schematic block diagram of a vehicle-to-cloud communication system 10 based on a service-oriented architecture according to one or more embodiments of the present disclosure. As shown in FIG. 1, the vehicle-to-cloud communication system 10 includes a vehicle 110 and a cloud 120, where the vehicle 110 is deployed with an in-vehicle network terminal 111 and an SOA framework module 112. The cloud 120 is deployed with a cloud service platform 121. Optionally, the vehicle-to-cloud communication system 10 may further include a third-party service provider 130 that communicates with the cloud 120.

Optionally, the vehicle 110 communicates with the cloud 120 by using the message queuing telemetry transport (MQTT) protocol. In some aspects, the cloud 120 is deployed with an MQTT server 122 for the cloud service platform 121 to send a request for invoking an in-vehicle service to the vehicle 110, and the vehicle 110 is deployed with an MQTT client 113 for the vehicle 110 to receive such request for invoking the in-vehicle service. In some other aspects, the cloud 120 may further be deployed with an MQTT client 123, in order for the cloud service platform 121 to receive a response sent by the in-vehicle network terminal 111.

The vehicle-to-cloud communication system 10 according to one or more embodiments of the present disclosure can register the in-vehicle services to be invoked by the cloud 120. For example, the cloud service platform 121 stores and manages an in-vehicle service list that can be used by the cloud. Optionally, the in-vehicle services as described herein may be classified into static services and dynamic services. The static services refer to in-vehicle services considered to be deployed on all vehicles and are tied to the firmware version of the vehicle. All vehicles with the firmware versions can provide such static services, such as operating vehicle's low-beam headlights. The dynamic services are in-vehicle services deployed only on selected vehicles and are not tied to the firmware version of the vehicle. The dynamic services may vary depending on a vehicle's hardware, service providers, or the vehicle's location. Therefore, it cannot be determined that the vehicle definitely can provide these in-vehicle services. Examples of the dynamic services include LiDAR-based pedestrian detection or weather forecasting. It should be noted that the cloud service platform 121 initially stores a complete in-vehicle service list for all vehicles, which includes identifiers, default presence states, and default service status of all in-vehicle services that may be deployed on all vehicles, where the presence state indicates whether the dynamic service is deployed on a vehicle, and the service status indicates whether an in-vehicle service deployed on a vehicle is available. The cloud service platform 121 may send the in-vehicle service list to the in-vehicle network terminal 111, which monitors the plurality of in-vehicle services (e.g., the static services, and the dynamic services) included in the in-vehicle service list, and updates the in-vehicle service list based on the monitoring result. Since the static services can be always provided by all vehicles, the in-vehicle network terminal 111 only needs to request the service status of the static services included in the in-vehicle service list from the SOA framework module 112, without paying attention to the presence states of the static services. Since the dynamic services are deployed only on selected vehicles, the in-vehicle network terminal 111 needs to request the service status and the presence states of the dynamic services included in the in-vehicle service list from the SOA framework module 112. After obtaining information (i.e., the service status of the static services, and the service status and the presence states of the dynamic services) from the SOA framework module 112, the in-vehicle network terminal 111 synchronizes the updated in-vehicle service list to the cloud service platform 121, in order for the cloud service platform to register and invoke a corresponding in-vehicle service based on the updated in-vehicle service list.

Optionally, during registration of the in-vehicle services, the cloud service platform 121 completes the following configuration process: allowing a request for invoking a dynamic service to be sent if the presence state of the dynamic service indicates that a dynamic service is deployed on the vehicle; skipping allowing a request for invoking a dynamic service to be sent if the presence state of the dynamic service indicates that the dynamic service is not deployed on the vehicle; allowing an invocation request to be sent to the vehicle if the service status of a dynamic service or a static service indicates that the dynamic service or the static service is available; and returning an invocation failure response to the service requester if the service status of a dynamic service or a static service indicates that the dynamic service or the static service is unavailable.

Optionally, upon receiving a request for invoking an in-vehicle service from the third-party service provider 130 or internally from the cloud, the cloud service platform 121 may query the in-vehicle service list, and perform the following operations based on a query result: sending the request for invoking the in-vehicle service to the vehicle if the in-vehicle service requested is a static service that is available; returning an invocation failure response to the third party or internally to the cloud if the in-vehicle service requested is a static service that is unavailable; returning an invocation prohibition response to the third party or internally to the cloud if the in-vehicle service requested is a dynamic service that is not deployed on the vehicle; returning an invocation failure response to the third party or internally to the cloud if the in-vehicle service requested is a dynamic service that is deployed on the vehicle and is unavailable; and sending the request for invoking the in-vehicle service to the vehicle if the in-vehicle service requested is a dynamic service that is deployed on the vehicle and is available.

Further, the vehicle-to-cloud communication system 10 according to one or more embodiments of the present disclosure can register the cloud services to be invoked by the vehicle 110. For example, the cloud service platform 121 reads heterogeneous cloud services that are deployed in one or more cloud service environments (e.g., Dubbo, K8S, and Spring Cloud) and converts Restful API into callable services by using metadata of Rest API. The cloud service platform 121 converts the heterogeneous cloud services into homogeneous cloud services that vehicles based on service-oriented architecture (a vehicle-side SOA) can discover and interact with by using standardized interface description information after retrieving metadata from the cloud service environments. The cloud service platform 121 then sends a cloud service list including identifiers of the homogeneous cloud services to the in-vehicle network terminal 111 deployed at the vehicle side, in order for the in-vehicle network terminal 111 to register the homogeneous cloud services and for the SOA framework module 112 to invoke the homogeneous cloud services.

Requesting of the cloud services by a vehicle may be divided into two scenarios based on a connection status of the MQTT connection. Specifically, when receiving a request for invoking the cloud service that is initiated by the SOA framework module 112, the in-vehicle network terminal 111 first determines whether the MQTT connection between the vehicle and the cloud is stable. If the MQTT connection is stable (e.g., well connected), the in-vehicle network terminal 111 uploads the request for invoking the cloud service to the cloud via the MQTT connection. If the MQTT connection is unstable (e.g., disconnected or weak connection), the in-vehicle network terminal 111 may query whether a lightweight version of the service (a lite service) corresponding to the requested cloud service is deployed on the vehicle. In some aspects, the lightweight version of the service may be deployed in the form of a runtime plug-in on the vehicle. In some other aspects, the lightweight version of the service may be an alternative service listed in the cloud service list and it runs and handles simple computation requests for the cloud as a substitute of the requested cloud service when the requested cloud service is unavailable, thereby ensuring service continuity in weak-connection or no-connection situations. If it is determined that the lightweight version of the service is deployed on the vehicle, the in-vehicle network terminal 111 runs the lightweight version of the service, and obtains a processing result to generate a response. If it is determined that the lightweight version of the service is not deployed on the vehicle, the in-vehicle network terminal 111 returns an invocation failure response. In this way, under the SOA architecture for in-vehicle services, various heterogeneous cloud services at the cloud side may be accessed through the cloud service platform 121 and integrated with the SOA framework module 112 deployed at the vehicle side, thereby implementing enhanced interoperability and seamless interaction between services at the cloud side and services at the vehicle side.

Still further, the vehicle-to-cloud communication system 10 according to one or more embodiments of the present disclosure is capable of simulating in-vehicle services by cloud-side services. For example, the vehicle 110 first defines an interface based on a first in-vehicle service (e.g., service deployed at the vehicle side for turning on vehicle's low-beam headlights), and provides interface description information to the cloud service platform 121. The cloud service platform 121 generates a virtual instance of service corresponding to the first in-vehicle service based on the interface description information. When the virtual instance of service processes the request at the cloud side in response to receiving a request for invoking the first in-vehicle service, the cloud may mimic the response of the first in-vehicle service (i.e., simulating a response of the low-beam headlight turning-on service at the cloud side). Optionally, a service simulated response may also be returned based on configuration information entered during simulation. For example, the cloud service platform 121 may receive configuration information predefined by a simulation tester. For example, the configuration information indicates returning a successful turn-on response after receiving a request for turning on the headlights. Specifically, if the virtual instance of service processes the request at the cloud side in response to receiving the request for invoking the first in-vehicle service, a successful turn-on response may be returned based on inputs within the configuration information. In this way, the problem of dependency on other services and hardware during the development of in-vehicle services can be solved, allowing the in-vehicle services to be simulated swiftly at the cloud side in the vehicle-cloud integrated architecture, which achieves independency of developers to validate individual services, thereby enhancing R&D efficiency in developing in-vehicle features.

Continued reference is made to FIG. 2 below, which is a schematic flowchart of a vehicle-to-cloud communication method 20 based on a service-oriented architecture according to one or more embodiments of the present disclosure. It should be noted that the method 20 is implemented at the vehicle side (e.g., the vehicle 110 or the in-vehicle network terminal 111 shown in FIG. 1).

In step S210, an in-vehicle service list sent by a cloud is received, where the in-vehicle service list includes identifiers, presence states, and service status of a plurality of in-vehicle services. Optionally, the in-vehicle services include static services deployed on all vehicles, and dynamic services deployed on selected vehicles, where the presence state indicates whether the dynamic service is deployed on a vehicle, and the service status indicates whether an in-vehicle service deployed on a vehicle is available.

In step S220, the plurality of in-vehicle services included in the in-vehicle service list are monitored, and the in-vehicle service list is updated based on a monitoring result. Optionally, the monitoring the in-vehicle services, and updating the in-vehicle service list based on a monitoring result includes: monitoring and updating the service status of the static services included in the in-vehicle service list; and monitoring and updating the presence states and the service status of the dynamic services included in the in-vehicle service list. Since the static services are always deployed on all vehicles, only the service status of the static services needs to be monitored, without paying attention to the presence states of the static services. Since the dynamic services are deployed only on selected vehicles, the service status and presence states of the dynamic services need to be simultaneously monitored.

In step S230, the updated in-vehicle service list is uploaded to the cloud, in order for a cloud service platform deployed at the cloud side to register and invoke a corresponding in-vehicle service based on the updated in-vehicle service list. Optionally, the invocation of an in-vehicle service includes: receiving a request for invoking an in-vehicle service from the cloud, where the vehicle and the cloud communicate through a message queuing telemetry transport connection; obtaining a processing result of the invoked in-vehicle service based on the request for invoking the in-vehicle service; and uploading the processing result to the cloud, in order for the cloud to return the processing result based on a callback address.

Optionally, the method 20 may further include a step of registering cloud services at the vehicle side (step S240) and/or invoking the cloud services at the vehicle side (step S250). In step S240, a cloud service list sent by the cloud is received, the cloud service list including identifiers of a plurality of cloud services, where the cloud services are homogeneous services that vehicles based on service-oriented architecture can discover and interact with, and are converted from heterogeneous cloud services read from one or more cloud service sources by the cloud service platform by using standardized interface description information; and the cloud services are registered at the vehicle side based on the cloud service list. In step S250, in response to receiving a request for invoking the cloud service that is initiated by the vehicle, it is determined whether the message queuing telemetry transport connection is stable, where the vehicle and the cloud communicate through a message queuing telemetry transport connection; and if the message queuing telemetry transport connection is stable, the request for invoking the cloud service is uploaded to the cloud via the message queuing telemetry transport connection. Optionally, step S250 further includes: querying whether a lightweight version of the service corresponding to the requested cloud service is deployed on the vehicle if the message queuing telemetry transport connection is unstable; and a processing result of the lightweight version of the service is obtained, and a response is generated by using the processing result, if the lightweight version of the service is deployed on the vehicle; and returning an invocation failure response if the lightweight version of the service is not deployed on the vehicle. In some aspects, the lightweight version of the service may be deployed in the form of a runtime plug-in on the vehicle. In some other aspects, the lightweight version of the service may be an alternative service listed in the cloud service list and it runs and handles simple computation requests for the cloud as a substitute of the requested cloud service when the requested cloud service is unavailable, thereby ensuring service continuity in weak-connection or no-connection situations.

Continued reference is made to FIG. 3 below, which is a schematic flowchart of a vehicle-to-cloud communication method 30 based on a service-oriented architecture according to one or more embodiments of the present disclosure. It should be noted that the method 20 is implemented at the cloud side (e.g., the cloud 120 or the cloud service platform 121 shown in FIG. 1).

In step S310, an in-vehicle service list is sent to a vehicle, in order for the vehicle to monitor in-vehicle services included in the in-vehicle service list, and the in-vehicle service list is updated based on a monitoring result, where the in-vehicle service list includes identifiers, presence states and service status of a plurality of in-vehicle services. Optionally, the in-vehicle services include static services deployed on all vehicles and dynamic services deployed on selected vehicles, where the presence state indicates whether a dynamic service is deployed on a vehicle, and the service status indicates whether an in-vehicle service deployed on the vehicle is available.

In step S320, the updated in-vehicle service list returned by the vehicle is received, and the cloud service platform deployed at the cloud side registers and invokes a corresponding in-vehicle service based on the updated in-vehicle service list. Optionally, registration of the in-vehicle service list includes: allowing the cloud service platform to send a request for invoking a dynamic service if the presence state of the dynamic service indicates that the dynamic service is deployed on the vehicle; and skipping allowing the cloud service platform to send a request for invoking a dynamic service if the presence state of the dynamic service indicates that the dynamic service is not deployed on the vehicle. Optionally, the step of invoking the in-vehicle service list includes: querying the in-vehicle service list in response to receiving a request for invoking an in-vehicle service from a third party or internally from the cloud; and sending the request for invoking the in-vehicle service to the vehicle if the requested in-vehicle service is a static service that is available; returning an invocation failure response to the third party or internally to the cloud if the requested in-vehicle service is a static service that is unavailable; returning an invocation prohibition response to the third party or internally to the cloud if the requested in-vehicle service is a dynamic service that is not deployed on the vehicle; returning an invocation failure response to the third party or internally to the cloud, if the requested in-vehicle service is a dynamic service that is deployed on the vehicle and is unavailable; and sending the request for invoking the in-vehicle service to the vehicle, if the requested in-vehicle service is a dynamic service that is deployed on the vehicle and is available, where the vehicle and the cloud communicate through a message queuing telemetry transport connection.

Optionally, the method 30 may further include cloud service discovery and registration (step S330). In step S330, heterogeneous cloud services are read from one or more cloud service sources, and the heterogeneous cloud services are converted into homogeneous cloud services that vehicles based on service-oriented architecture can discover and interact with by using standardized interface description information; and a cloud service list including identifiers of the homogeneous cloud services is sent to the vehicle, in order for the vehicle to register and invoke the homogeneous cloud services.

Optionally, the method 30 may further include simulation of the in-vehicle service by the cloud-side service (step S340). In step S340, interface description information sent by the vehicle and defined based on a first in-vehicle service is received; a virtual instance of service corresponding to the first in-vehicle service is generated based on the interface description information; and in response to receiving a request for invoking the first in-vehicle service, the virtual instance of service is run at the cloud side, and a service simulated response is returned based on entered configuration information.

It should be noted that the steps in the method 20 and the method 30 may refer to the implementations of the operation process of the vehicle-to-cloud communication system 10 as detailed above, and related content is cited herein. Due to space limitations, details will not be reiterated.

In addition, the present disclosure may also be implemented as an in-vehicle network terminal, including a memory, a processor, and a computer program stored on the memory and executable on the processor, where when the processor executes the program, any one of the embodiments of the method 20 shown in FIG. 2 is implemented.

The present disclosure may also be implemented as a cloud service platform, including a memory, a processor, and a computer program stored on the memory and executable on the processor, where when the processor executes the program, any one of the embodiments of the method 30 shown in FIG. 3 is implemented.

In addition, as described above, the present disclosure may also be implemented as a computer storage medium, storing a program for causing a computer to perform the steps shown in FIG. 2 or FIG. 3. Here, various forms of computer storage media, for example, a disk (for example, a magnetic disk and an optical disc), a card (for example, a memory card and an optical card), a semiconductor memory (for example, a ROM and a non-volatile memory), and a tape (for example, a magnetic tape and a cassette tape), may be used as the computer storage medium.

First, the vehicle-to-cloud communication solution based on the service-oriented architecture according to one or more embodiments of the present disclosure achieve uniform invocation of various in-vehicle services by the cloud by having the in-vehicle service list stored and managed at the cloud side and monitored and updated at the vehicle. In this way, a service consumer can easily invoke the in-vehicle services through the cloud without having to know interface protocols, formats, or service deployment addresses, thereby expanding in-vehicle service capabilities and facilitating the implementation of vehicle-cloud integration.

Second, the vehicle-to-cloud communication solution based on the service-oriented architecture according to one or more embodiments of the present disclosure enables various heterogeneous services deployed at the cloud side to be accessed through the cloud service platform under the SOA architecture of the entire vehicle service, and integrated with the SOA architecture deployed at the vehicle side, thereby implementing enhanced interoperability and seamless interaction between services at the cloud side and services at the vehicle side. With this solution, a service requester only needs to invoke a corresponding service, with no need to be concerned with the deployment environment of the service, thereby masking the heterogeneity of service requests across the two sides, allowing upper-layer applications and peer services to directly access services deployed at the two sides directly and uniformly based on the defined interfaces.

Furthermore, the vehicle-to-cloud communication solution based on the service-oriented architecture according to one or more embodiments of the present disclosure can solve the problem of dependency on other services and hardware during the development of in-vehicle services, allowing the in-vehicle services to be simulated swiftly at the cloud side in the vehicle-cloud integrated architecture, which achieves decoupling of vehicle software development from hardware, thereby enhancing R&D efficiency in developing in-vehicle features.

Various embodiments provided in the present disclosure may be implemented by hardware, software, or a combination of hardware and software where applicable. In addition, without departing from the scope of the present disclosure, various hardware components and/or software components described herein may be combined into a combined component including software, hardware, and/or both where applicable. Without departing from the scope of the present disclosure, various hardware components and/or software components described herein may be separated into sub-components including software, hardware, or both where applicable. In addition, where applicable, it is contemplated that software components can be implemented as hardware components, and vice versa.

Software (such as program code and/or data) in the present disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the present disclosure and specific applications thereof and thus enable those skilled in the art to implement and use the present disclosure. However, those skilled in the art will know that the above descriptions and examples are provided only for description and illustration. The proposed description is not intended to cover all aspects of the present disclosure or limit the present disclosure to the disclosed precise forms.

## Claims

1. A vehicle-to-cloud communication method based on a service-oriented architecture, **characterized in that** the method is implemented at a vehicle side and comprises the following steps:
receiving an in-vehicle service list sent by a cloud, wherein the in-vehicle service list comprises identifiers, presence states, and service status of a plurality of in-vehicle services;
monitoring the plurality of in-vehicle services comprised in the in-vehicle service list, and updating the in-vehicle service list based on a monitoring result; and
uploading the updated in-vehicle service list to the cloud, in order for a cloud service platform deployed at the cloud side to register and invoke a corresponding in-vehicle service based on the updated in-vehicle service list.

2. The method according to claim 1, **characterized in that** the in-vehicle services comprise static services deployed on all vehicles, and dynamic services deployed on selected vehicles, and the monitoring the in-vehicle services, and updating the in-vehicle service list based on a monitoring result comprises:
monitoring and updating the service status of the static services comprised in the in-vehicle service list; and
monitoring and updating the presence states and the service status of the dynamic services comprised in the in-vehicle service list,
wherein the presence state indicates whether the dynamic service is deployed on a vehicle, and the service status indicates whether an in-vehicle service deployed on a vehicle is available.

3. The method according to claim 1, **characterized in that** the method further comprises:
receiving a request for invoking an in-vehicle service from the cloud, wherein the vehicle and the cloud communicate through a message queuing telemetry transport connection;
obtaining a processing result of the invoked in-vehicle service based on the request for invoking the in-vehicle service; and
uploading the processing result to the cloud, in order for the cloud to return the processing result based on a callback address.

4. The method according to claim 1, **characterized in that** the method further comprises:
receiving a cloud service list sent by the cloud, the cloud service list comprising identifiers of a plurality of cloud services, wherein the cloud services are homogeneous services that vehicles based on service-oriented architecture can discover and interact with, and are converted from heterogeneous cloud services read from one or more cloud service sources by the cloud service platform by using standardized interface description information; and
registering the cloud services at the vehicle side based on the cloud service list.

5. The method according to claim 4, **characterized in that** the method further comprises:
determining whether a message queuing telemetry transport connection is stable in response to receiving a request for invoking the cloud service that is initiated by the vehicle, wherein the vehicle and the cloud communicate through the message queuing telemetry transport connection; and
uploading the request for invoking the cloud service to the cloud via the message queuing telemetry transport connection if the message queuing telemetry transport connection is stable.

6. The method according to claim 5, **characterized in that** the method further comprises:
querying whether a lightweight version of the service corresponding to the requested cloud service is deployed on the vehicle if the message queuing telemetry transport connection is unstable; and
obtaining a processing result of the lightweight version of the service, and generating a response by using the processing result, if the lightweight version of the service is deployed on the vehicle; and
returning an invocation failure response if the lightweight version of the service is not deployed on the vehicle.

7. A vehicle-to-cloud communication method based on a service-oriented architecture, **characterized in that** the method is implemented at a cloud side and comprises the following steps:
sending an in-vehicle service list to a vehicle, in order for the vehicle to monitor in-vehicle services comprised in the in-vehicle service list, and updating the in-vehicle service list based on a monitoring result, wherein the in-vehicle service list comprises identifiers, presence states, and service status of a plurality of in-vehicle services; and
receiving the updated in-vehicle service list returned by the vehicle, and registering and invoking a corresponding in-vehicle service based on the updated in-vehicle service list by a cloud service platform deployed at the cloud side.

8. The method according to claim 7, **characterized in that** the in-vehicle services comprise static services deployed on all vehicles, and dynamic services deployed on selected vehicles, the presence state indicates whether the dynamic service is deployed on a vehicle, and the service status indicates whether an in-vehicle service deployed on a vehicle is available.

9. The method according to claim 8, **characterized in that** the registering a corresponding in-vehicle service based on the updated in-vehicle service list by a cloud service platform deployed at the cloud side comprises:
allowing the cloud service platform to send a request for invoking a dynamic service if the presence state of the dynamic service indicates that a dynamic service is deployed on the vehicle; and
skipping allowing the cloud service platform to send a request for invoking a dynamic service if the presence state of the dynamic service indicates that the dynamic service is not deployed on the vehicle.

10. The method according to claim 8, **characterized in that** the invoking a corresponding in-vehicle service based on the updated in-vehicle service list by a cloud service platform deployed at the cloud side comprises:
querying the in-vehicle service list in response to receiving a request for invoking an in-vehicle service from a third party or internally from the cloud; and
sending the request for invoking the in-vehicle service to the vehicle if the requested in-vehicle service is a static service that is available;
returning an invocation failure response to the third party or internally to the cloud if the requested in-vehicle service is a static service that is unavailable;
returning an invocation prohibition response to the third party or internally to the cloud if the requested in-vehicle service is a dynamic service that is not deployed on the vehicle;
returning an invocation failure response to the third party or internally to the cloud, if the requested in-vehicle service is a dynamic service that is deployed on the vehicle and is unavailable; and
sending the request for invoking the in-vehicle service to the vehicle, if the requested in-vehicle service is a dynamic service that is deployed on the vehicle and is available,
wherein the vehicle and the cloud communicate through a message queuing telemetry transport connection.

11. The method according to claim 7, **characterized in that** the method further comprises:
reading heterogeneous cloud services from one or more cloud service sources, and converting the heterogeneous cloud services into homogeneous cloud services that vehicles based on service-oriented architecture can discover and interact with by using standardized interface description information; and
sending a cloud service list comprising identifiers of the homogeneous cloud services to the vehicle, in order for the vehicle to register and invoke the homogeneous cloud services.

12. The method according to claim 7, **characterized in that** the method further comprises:
receiving interface description information sent by the vehicle and defined based on a first in-vehicle service;
generating a virtual instance of service corresponding to the first in-vehicle service based on the interface description information; and
running the virtual instance of service at the cloud side, and returning a service simulated response based on entered configuration information, in response to receiving a request for invoking the first in-vehicle service.

13. An in-vehicle network terminal, comprising a memory, a processor, and a computer program stored on the memory and executable on the processor, **characterized in that** when the processor executes the program, the method according to any one of claims 1 to 6 is implemented.

14. A cloud service platform, comprising a memory, a processor, and a computer program stored on the memory and executable on the processor, **characterized in that** when the processor executes the program, the method according to any one of claims 7 to 12 is implemented.

15. A computer storage medium, **characterized in that** the computer storage medium comprises instructions, wherein when the instructions are executed, the method according to any one of claims 1 to 12 is performed.
